# EUROPÄISCHE PATENTSCHRIFT

(11) **EP 3 283 890 B1**
(45) Veröffentlichungstag und Bekanntmachung des Hinweises auf die Patenterteilung: **02.06.2021**
(21) Anmeldenummer: 16719775.5
(22) Anmeldetag: 12.04.2016
(51) Int. Cl.: G01P 5/24

(54) **ULTRASCHALLWINDMESSER UND VERFAHREN ZUR ERMITTLUNG WENIGSTENS EINER KOMPONENTE EINES WINDGESCHWINDIGKEITSVEKTORS ODER DER SCHALLGESCHWINDIGKEIT IN DER ATMOSPHÄRE**
ULTRASONIC ANEMOMETER AND METHOD FOR DETERMINING AT LEAST ONE COMPONENT OF A WIND SPEED VECTOR OR THE SOUND SPEED IN THE ATMOSPHERE
ANÉMOMÈTRE ULTRASONORE ET PROCÉDÉ POUR LA DÉTERMINATION D'AU MOINS UNE COMPOSANTE D'UN VECTEUR DE VITESSE DU VENT OU DE LA VITESSE DU SON DANS L'ATMOSPHÈRE

(30) Priorität: 12.04.2015 DE 102015004408; 19.10.2015 DE 102015013399
(43) Veröffentlichungstag der Anmeldung: 21.02.2018
(73) Patentinhaber: METEK Meteorologische Messtechnik GmbH, 25337 Elmshorn (DE)
(72) Erfinder: PETERS, Gerhard, 22547 Hamburg (DE)
(74) Vertreter: Heinemeyer, Karsten
(86) Internationale Anmeldenummer: PCT/EP2016/025034
(87) Internationale Veröffentlichungsnummer: WO 2016/165836

(56) Entgegenhaltungen:
- DE-A1- 2 911 704
- US-A- 3 633 415
- US-A- 5 343 744

## Beschreibung

Die Erfindung betrifft einen Ultraschallwindmesser zur Messung der Geschwindigkeit von anströmendem Wind mit wenigstens einem Sender zum Emittieren von Schallwellen und mindestens einem Empfänger zum wenigstens teilweisen Aufnehmen der emittierten Schallwellen und mit einer Auswerteeinheit, die unter Zugrundelegung einer erfassten Laufzeit der Schallwellen auf einer zwischen Sender und Empfänger befindlichen Messstrecke die Größe wenigstens einer Komponente des Windvektors und/oder der Schallgeschwindigkeit ermittelt.

Es sind unterschiedliche Messinstrumente bekannt, mit denen die lokale Messung der Geschwindigkeit eines Strömungsfeldes, insbesondere der Windgeschwindigkeit, erfolgt. Eine besondere Gattung von Windmessgeräten bzw. sogenannten Anemometern sind die Ultraschallanemometer. Bereits seit langem bekannte Ultraschallanemometer nutzen das Prinzip der Messung der Laufzeit der Schallwellen zwischen Sender und Empfänger. Hierbei wird ausgenutzt, dass Schallwellen von dem Medium, in dem sie sich ausbreiten, mitgeführt werden, sodass die Laufzeit von Signalen über eine Messstrecke fester Länge von der Durchströmung der Messstrecke abhängt. Mit Hilfe von Schallwellen hoher Frequenz bzw. hoher Bandbreite können Laufzeiten besonders genau bestimmt werden, sodass auf Messstrecken mit kurzer Distanz bevorzugt hochfrequente Schallwellen zum Einsatz kommen. Da die Schallgeschwindigkeit sowohl von der Lufttemperatur als auch von der Luftfeuchte abhängt, werden üblicherweise Laufzeiten in beiden Richtungen, also bidirektional, bestimmt. Aus der Summe dieser beiden Laufzeiten kann ferner die sogenannte virtuelle Temperatur berechnet werden.

Bekannte Ultraschallanemometer verfügen üblicherweise über mehrere Messstrecken zwischen den einzelnen Ultraschallsendern und -empfängern, über die die Schallgeschwindigkeit in verschiedenen Raumrichtungen gemessen wird. Aus den ermittelten Messwerten berechnet eine Messelektronik die horizontale und die vertikale Windgeschwindigkeit.

Für Messungen der drei Windkomponenten, insbesondere zur Messung der entsprechenden Mittelwerte, und der Schallgeschwindigkeit sowie deren turbulenten Schwankungen in der Atmosphäre werden Ultraschallanemometer in verschiedenen Ausführungsformen eingesetzt, wie sie etwa in der VDI Richtlinie 3786 Blatt 12 aufgeführt sind. Je nach Sensorkopfausführung werden eine, zwei oder drei Messstrecken verwendet. Diese werden von als Sender und Empfänger dienenden Schallwandlern gebildet, die sich an den Enden der Messstrecken befinden und Schallsignale entlang der Messstrecken senden und/oder empfangen. Ein wesentliches Kriterium für die Anordnung der Messstrecken und der Schallwandler ist die Minimierung von Messfehlern aufgrund von Strömungsdeformationen bzw. Abschattungen durch die Schallwandler selbst. Der auftretende Fehler ist am größten, wenn die Anströmrichtung parallel zu einer Messstrecke ist, und am kleinsten, wenn die Anströmrichtung senkrecht zur Messstrecke ist.

In diesem Zusammenhang ist aus der DE 689 01 800 T2 ein Ultraschallwindmesser bekannt, mit dem die Laufzeiten von Schallwellen auf verschiedenen Messstrecken zwischen den einzelnen Ultraschallwandlern erfasst und ausgewertet werden. Der beschriebene Ultraschallwindmesser verfügt über eine Anordnung von emittierenden und empfangenen Ultraschallwandlern, die derart angeordnet sind, dass sie mindestens drei verschiedene Ultraschallübertragungsbahnen in der Luft definieren. Weiterhin ist eine Messelektronik vorgesehen, sodass auf der Grundlage der Messung der Ausbreitungszeiten der Ultraschallwellen entlang der verschiedenen Bahnen sowohl die Windrichtung als auch die Windgeschwindigkeit unter Berücksichtigung der gemessenen Ausbreitungszeiten ermittelt werden.

Ferner beschreibt die US 5 343 744 A ein Ultraschallanemometer mit Schallwandlern, die zum Senden bzw. Empfangen von Ultraschallsignalen eingerichtet sind. Auf der Grundlage von Veränderungen der Laufzeit der Ultraschallsignale auf unterschiedlichen Messstrecken werden schließlich die Windgeschwindigkeit bzw. deren unterschiedliche Komponenten in einer Ebene ermittelt. Gemäß der beschriebenen technischen Lösung sind die Ultraschallwandler derart geneigt angeordnet, dass die zwischen den Schallwandlern verlaufenden Messstrecken nicht mit Strahlachsen, die senkrecht auf der Oberfläche der Schallwandler stehen, zusammenfallen. Durch die geneigte Anordnung der Ultraschallwandler wird erreicht, dass mithilfe von drei Schallwandlern drei Messstrecken in einer horizontalen Ebene aufgespannt werden und die Anzahl der für eine entsprechende Messung benötigten Ultraschallwandler somit gegenüber einer Anordnung, bei der die Strahlachsen der Ultraschallwandler mit den Messstreckenachsen zusammenfallen, verringert wird.

Im Weiteren ist aus der US 3 633 415 A eine Messvorrichtung zur Messung der Strömungsgeschwindigkeit von Gasen und Flüssigkeiten in einer Ebene bekannt.

Generell kommen mit den üblicherweise verwendeten Ultraschallanemometern zwei unterschiedliche Typen von Messstreckenanordnungen zum Einsatz. Bei einem ersten Typ von Sensorkopf ist eine Messstrecke vertikal und zwei Messstrecken sind horizontal ausgerichtet. Hingegen sind bei einem zweiten Typ von Sensorkopf drei Messtrecken typischerweise um einen Winkel von 45° bis 60° geneigt und ihre relativen Azimutwinkel betragen 120°.

Der übliche Aufbau der die Laufzeit berücksichtigenden Ultraschallwindmesser basiert somit auf der Anordnung antiparalleler Ausbreitungsstrecken, auf denen die Laufzeit des Schalls gemessen wird. Hierfür sind jeweils an beiden Enden jeder Messstrecke Ultraschallwandler, die bevorzugt abwechselnd als Sender und als Empfänger arbeiten, erforderlich. Üblicherweise werden heute reziproke Schallwandler eingesetzt, die die Sende- und Empfangsfunktion jeweils in sich vereinen.

Ein häufiger Zweck bei der Ermittlung der drei Windkomponenten, insbesondere der entsprechenden Mittelwerte, und der Schallgeschwindigkeit einschließlich der turbulenten Schwankungen in der Atmosphäre ist die Bestimmung vertikaler so genannter "Eddy Covariance"-Flüsse von Luftbeimengungen und Energie, wie sie Teil internationaler Messprogramme, wie etwa AmeriFlux, EUROFLUX und Mediflux sind. Insbesondere Wärme-, Wasserdampf-, Kohlenstoffdioxid- und Methanströme werden auf diese Weise überwacht.

Bei derartigen Messungen bestehen vor allem für die Messung der vertikalen Windkomponente hohe Genauigkeitsanforderungen. Messstandorte werden vorzugsweise so gewählt, dass der Windvektor im Mittel nahezu horizontal gerichtet ist.

In diesem Zusammenhang liefert die Schallwandler-Anordnung des ersten oben beschriebenen Typs mit einer vertikalen und zwei horizontalen Messstrecken aufgrund der vertikal angeordneten Messtrecke bei nahezu horizontaler Anströmung direkt die vertikale Windkomponente, die unter diesen Bedingungen mit besonders geringem Fehler durch Abschattungseffekte behaftet ist. Ein wesentlicher Nachteil dieser Anordnung ist die horizontale Ausrichtung der anderen Messstrecken. Hierdurch ist der nutzbare Windrichtungsbereich begrenzt, da Sektoren mit nahezu oder komplett streckenparalleler Anströmrichtung einen großen Abschattungsfehler aufweisen und eine entsprechend geringere Qualität der gemessenen Horizontalwindkomponenten zur Folge haben. Die vertikale Strecke erlaubt zwar eine hohe Messgenauigkeit der Vertikalwindkomponente, ein Nachteil dieser Streckenausrichtung ist jedoch die Benetzung des unteren Sensors durch Regen oder Tau oder bei beheizten Sensorköpfen durch Schmelzwasser. Dieser Effekt erklärt sich damit, dass die Umwandlung elektromechanischer Schwingungen in Schallschwingungen der Luft über eine schwingende Oberfläche bzw. eine Membran erfolgt, wobei die Schallenergie vorzugsweise senkrecht zur Membran abgestrahlt wird. Die Membranen der senkrechten Messstrecke sind daher horizontal ausgerichtet, was dazu führt, dass sich Regen- oder Tautropfen auf der unteren Membran sammeln und zu einer Störung oder sogar Unterbrechung der Messung führen können. Für den oberen Sensor ergibt sich eine ähnliche Situation, da sich durch Regen, Tau oder, insbesondere bei beheizten Sensorköpfen, Schmelzwasser Tropfen bilden, die dann an den Schallwandlern hängen und deren Oberfläche teilweise oder vollständig abdecken.

Mit einer Sensoranordnung entsprechend dem zweiten Typ mit geneigten Messstrecken werden die zuvor beschriebenen Nachteile vermieden, sodass entsprechend ausgeführte Ultraschallwindmesser verbreitet in EC-Messprogrammen zum Einsatz kommen. Nachteilig ist allerdings, dass die Vertikalwindkomponente aus den Messungen entlang der geneigten Messstrecken ermittelt werden muss. Damit beeinflussen Abschattungseffekte auf diesen Messstrecken die Genauigkeit der abgeleiteten vertikalen Windkomponente. Jüngere Untersuchungen haben gezeigt, dass bei den verwendeten Neigungswinkeln durch die Abschattungseffekte eine signifikante Unterschätzung der vertikalen Windkomponente und damit der EC-Flüsse auftritt. Nachteilig für die Genauigkeit der Vertikalkomponente ist außerdem, dass diese indirekt durch Kombination der drei geneigten Komponenten ermittelt werden muss.

Ausgehend von den bekannten Ultraschallwindmessgeräten sowie den zuvor erläuterten Anforderungen und Problemen liegt der Erfindung die Aufgabe zugrunde, ein Ultraschallwindmessgerät, mit dem die Laufzeit von Schallwellen gemessen und ausgewertet wird, derart weiterzubilden, dass die zuvor beschriebenen Probleme zuverlässig vermieden werden und eine hochgenaue Ermittlung der einzelnen Komponenten des Windvektors, insbesondere der vertikalen Windkomponente, und/oder der Schallgeschwindigkeit realisiert wird. Der anzugebende Windmesser soll ferner einen vergleichsweise einfachen konstruktiven Aufbau besitzen. Gleichzeitig soll sichergestellt werden, dass es in Abhängigkeit der jeweiligen Messanforderungen möglich ist, Störungen der Schallwandler durch unterschiedliche Witterungseinflüsse weitgehend auszuschließen. Ein weiteres wesentliches Merkmal soll darin bestehen, dass die Steuerelektronik vergleichsweise einfach zu realisieren ist und insgesamt ein robustes, einfaches und kostengünstig herzustellendes Ultraschallwindmessgerät zur Verfügung gestellt werden kann.

Die vorstehende Aufgabe wird mit einem Ultraschallwindmesser gemäß Anspruch 1 gelöst. Ein ebenso geeignetes Verfahren ist im Anspruch 6 angegeben und mit Anspruch 10 wird eine bevorzugte Verwendung eines erfindungsgemäß ausgeführten Windmessers beansprucht. Vorteilhafte Weiterbildungen der Erfindung sind in den abhängigen Ansprüchen angegeben und werden in der folgenden Beschreibung unter teilweiser Bezugnahme auf die Figuren näher erläutert.

Die Erfindung betrifft einen Ultraschallwindmesser zur Ermittlung entweder eines dreidimensionalen Windvektors oder sowohl wenigstens eines dreidimensionalen Windvektors als auch einer Schallgeschwindigkeit mit wenigstens einem Sender mit einer Schallemissionsfläche zum Emittieren von Schallwellen und zumindest einem Empfänger mit einer Schalldetektionsfläche zum wenigstens teilweisen Aufnehmen der emittierten Schallwellen und mit einer Auswerteeinheit, die unter Zugrundelegung einer erfassten Laufzeit, die die Schallwellen auf einer zwischen der Schallemissionsfläche des wenigstens einen Senders und der Schalldetektionsfläche des wenigstens einen Empfängers liegenden Messstrecke zum Zurücklegen dieser Messstrecke benötigen, den Windvektor oder den Windvektor und die Schallgeschwindigkeit ermittelt. Die erfindungsgemäße technische Lösung zeichnet sich dadurch aus, dass die zumindest zeitweise als Sender und/oder als Empfänger arbeitenden Schallwandler derart angeordnet sind, dass wenigstens eine zur Erdoberfläche im Wesentlichen senkrechte Messstrecke und wenigstens zwei hierzu geneigte, nicht horizontal ausgerichtete Messstrecken, bereitgestellt werden, wobei die drei Messstrecken nicht komplanar angeordnet sind, und senkrecht zur Oberfläche der Schallemissionsflächen ausgerichtete Strahlachsen nicht mit Achsen der wenigstens einen zur Erdoberfläche im Wesentlichen senkrechten Messstrecke übereinstimmen und dass die Auswerteeinheit eingerichtet ist, um unter Verwendung einer Laufzeit, die die Schallwellen zum Zurücklegen der zur Erdoberfläche senkrechten Messstrecke benötigen, eine vertikale Windkomponente des Windvektors und unter Verwendung einer Laufzeit, die die Schallwellen zum Zurücklegen der wenigstens zwei geneigten Messstrecken benötigen, eine horizontale Windkomponente des Windvektors zu ermitteln. Das wesentliche technische Merkmal des erfindungsgemäß ausgeführten Windmessers besteht somit darin, dass wenigstens eine vertikal ausgerichtete Messstrecke zwischen einem Sender und einem Empfänger angeordnet ist, obwohl die Schallemissionsfläche sowie die Schalldetektionsfläche gegenüber der Horizontalen geneigt sind. Die im Folgenden verwendeten Ausdrücke "Windgeschwindigkeitsvektor" bzw. "Windvektor" sind als gleichwertig zu betrachten, da der entsprechende Vektor regelmäßig sowohl die Information über die Geschwindigkeit als auch die Richtung des Windes enthält.

Auf diese Weise wird ein Ultraschallsensor für die genaue dreidimensionale Messung von Mittelwerten der drei Windkomponenten und der Schallgeschwindigkeit sowie von deren turbulenten Schwankungen bereitgestellt, mit dem insbesondere die Messung der mittleren vertikalen Windkomponente und deren Schwankung mit besonders großer Genauigkeit möglich ist. Gleichzeitig ist auf bevorzugte Weise die Messung von Mittelwerten der drei Windkomponenten und der Schallgeschwindigkeit und von deren turbulenten Schwankungen gegenüber atmosphärischen Einflüssen unempfindlich.

Erfindungsgemäß ist die Auswerteeinheit derart ausgeführt ist, dass wenigstens eine vertikale Komponente des Windgeschwindigkeitsvektors bestimmt wird. Aufgrund der Anordnung der Sensoren, insbesondere der Ultraschallwandler, wobei wenigstens eine vertikale Messstrecke vorgesehen ist, die sich zwischen gegenüber der Horizontalen geneigten Schallwandleroberflächen befindet, kann eine besonders genaue Ermittlung vertikalen Windkomponente des Windvektors sichergestellt werden. Vorzugsweise ist die Auswerteeinheit weiterhin derart ausgeführt, dass ein Mittelwert der wenigstens einen Komponente des Windgeschwindigkeitsvektors, insbesondere der vertikalen Komponente, bestimmt wird.

Im Gegensatz zu den bekannten Ultraschallwindmessern wird gemäß der Erfindung eine vertikale Messstrecke realisiert, obwohl die Oberflächen der Schallwandler bzw. die Oberflächen der Schallwandler-Membrane gegen die Horizontale geneigt sind. Da die Strahlachse der Ultraschallsignale senkrecht zu den Membranflächen gerichtet ist, stimmen die Strahl- und Messstreckenachsen allerdings nicht mehr überein. Aus diesem Grund werden vorzugsweise Schallwandler mit einer ausreichend breiten Abstrahl- und Empfangscharakteristik verwendet. Auf bevorzugte Weise werden die Empfänger bzw. Sender derart angeordnet, dass wenigstens eine, bevorzugt zwei oder drei zur Erdoberfläche im Wesentlichen senkrechte Messstrecken, die für die Ermittlung der Vertikalwindkomponente verwendet werden, und wenigstens eine, bevorzugt zwei geneigte Messstrecken, die für die Ermittlung der horizontalen Komponente des Windes verwendet werden, bereitgestellt werden. Mit der erfindungsgemäßen technischen Lösung können alle drei Windkomponenten mit deutlich reduzierter Strömungsbeeinflussung durch die die Sender und Empfänger tragende Struktur realisiert werden, da die Sender und/oder Empfänger zumindest teilweise geneigt sind und dennoch Schallwellen über eine senkrechte und wenigstens eine geneigte Messstrecke übertragen werden. Wesentlich ist hierbei vor allem, dass eine zur Erdoberfläche vertikale bzw. senkrechte Messstrecke mit einem geneigten Sender und/oder Empfänger bereitgestellt wird. In diesem Zusammenhang ist zu betonen, dass unter vertikal oder senkrecht eine zumindest nahezu vertikale oder senkrechte Ausrichtung zu verstehen ist, da die Ausrichtung vor allem durch Fertigungs- und Montagetoleranzen beeinflusst wird. Insgesamt ist die Abschattung einer Messstrecke am geringsten, wenn die Messstrecke senkrecht angeströmt wird. Da der mittlere Windvektor horizontal gerichtet ist, kann man die vergleichsweise kleinen vertikalen Auslenkungen des instantanen Windes am genauesten messen, wenn die entsprechende Messstrecke senkrecht steht. Abweichungen bei der Anordnung der Messstrecken führen letztendlich dazu, dass die Messstrecke zum instantanen Windvektor nicht mehr exakt senkrecht steht und damit auch ein entsprechender minimaler Abschattungsfehler unvermeidbar ist. Dieser verschlechtert sich nicht signifikant, solange die Abweichung der Messstreckenrichtung von der Vertikalen kleiner ist als die typischen vertikalen Winkelauslenkungen des Windvektors, beispielsweise kleiner als die Standardabweichung des Neigungswinkels des Windvektors.

Für typische Aufstellungsverhältnisse beträgt diese Standardabweichung im Klimamittel etwa 5°. Auf bevorzugte Weise liegt der Neigungswinkel einer als senkrecht oder vertikal bezeichneten Messstrecke daher in einem Bereich zwischen 0° und 5°.

In einer speziellen Ausführungsform der Erfindung verfügen die Schallemissionsfläche und/oder die Schalldetektionsfläche über eine Membran. Zum Aussenden von Schallwellen wird die Membran derart angesteuert, dass durch ihre gezielte Bewegung die benötigten Schallwellen erzeugt werden. Wird eine Membran für den Empfang von Schallwellen verwendet, so wird diese durch die aufgenommenen Schallwellen verformt und ein entsprechendes Signal an die Auswerteeinheit übertragen. In jedem Fall ist es wesentlich, dass die Laufzeit, die der Schall für das Zurücklegen der Messstrecke zwischen Sender und Empfänger benötigt, erfasst und ausgewertet wird.

Weiterhin ist es vorteilhaft, wenn der Sender und/oder der Empfänger wenigstens zeitweise beheizbar sind. Auf diese Weise kann zuverlässig ein Einfrieren der Sender und/oder der Empfänger bzw. eine entsprechende Eisbildung in diesem Bereich verhindert werden. Da die Membranflächen der Ultraschallwandler, zwischen denen die vertikale Messstrecke vorgesehen ist, gegenüber der Horizontalen geneigt sind, kann sich bildendendes Wasser abfließen oder es wird eine Tropfenbildung vermieden.

Gemäß der Erfindung wird ein Sender verwendet, dessen Schallwellen von wenigstens zwei beabstandet zu einander angeordneten Empfängern entweder gleichzeitig oder zu unterschiedlichen Zeitpunkten aufgenommen werden. Ein derartiger Ultraschallwindmesser zeichnet sich hierbei dadurch aus, dass zwischen dem ersten Sender mit der ersten Schallemissionsfläche und wenigstens einem zweiten Empfänger mit einer zweiten Schallemissionsfläche eine gegenüber der Vertikalen geneigte zweite Messstrecke gebildet wird und dass die Auswerteeinheit unter Zugrundelegung einer erfassten Laufzeit, die die Schallwellen zum Zurücklegen der zweiten Messstrecke benötigen, den Windvektor oder den Windvektor und die Schallgeschwindigkeit ermittelt. Gemäß dieser Ausführungsform ist lediglich ein Sender vorgesehen, während trotzdem wenigsten zwei Messstrecken gebildet werden, von denen eine vertikal und wenigstens eine gegenüber der Vertikalen geneigt angeordnet ist.

Bei einer weiteren Ausgestaltung der Erfindung ist es denkbar, dass die Auswerteeinheit derart ausgeführt ist, dass in Abhängigkeit einer Windrichtung eine Messstrecke aus einer Gruppe von wenigstens zwei Messstrecken für die Ermittlung der wenigstens einen Komponente des Windgeschwindigkeitsvektors und/oder der Schallgeschwindigkeit herangezogen wird. Auf vorteilhafte Weise ist es so möglich, die Messstrecke oder die Messstrecken für die Ermittlung des Windvektors einschließlich der Windkomponenten auszuwählen, die die verlässlichsten Messwerte liefern. In diesem Zusammenhang ist es denkbar, dass jeweils die Messstrecken gewählt werden, die unter Berücksichtigung der aktuellen Windrichtung am wenigsten gegenüber dem Wind abgeschattet werden. Für die Ermittlung der aktuellen Windrichtung wird vorzugsweise der erfindungsgemäß ausgeführte Ultraschallwindmesser selbst genutzt. Es ist allerdings ebenfalls möglich, der Auswerteeinheit ein geeignetes Signal, das die aktuelle Windrichtung repräsentiert, von einem externen Windmesser zuzuführen.

Gemäß der Ausführungsform ist vorgesehen, dass die Auswerteeinheit derart ausgeführt ist, dass jeweils drei Komponenten des Windgeschwindigkeitsvektors bestimmt werden. Auf der Grundlage der Bestimmung der drei Komponenten des Windvektors kann eine besonders genaue Bestimmung der Windrichtung im Raum, hier in der Atmosphäre, erreicht werden. Ebenso wird hierdurch eine besonders genaue Ermittlung der Windgeschwindigkeit und sogar der Schallgeschwindigkeit erreicht.

Neben einem speziell ausgeführten Ultraschallwindmessgerät betrifft die Erfindung auch ein Verfahren zur Ermittlung entweder wenigstens eines dreidimensionalen Windvektors oder sowohl eines dreidimensionalen Windvektors als auch einer Schallgeschwindigkeit. Bei dem erfindungsgemäßen Verfahren werden mit wenigstens einem Sender mit einer Schallemissionsfläche Schallwellen emittiert und mit zumindest einem Empfänger mit einer Schalldetektionsfläche die emittierten Schallwellen aufgenommen. Ferner werden mit einer Auswerteeinheit, unter Zugrundelegung einer erfassten Laufzeit, die die Schallwellen auf einer zwischen der Schallemissionsfläche des wenigstens einen Senders und der Schalldetektionsfläche des wenigstens einen Empfängers liegenden Messstrecke zum Zurücklegen dieser Messstrecke benötigen, der Windvektor oder der Windvektor und die Schallgeschwindigkeit ermittelt.

Das erfindungsgemäße Verfahren zeichnet sich dadurch aus, dass die zumindest zeitweise als Sender und/oder als Empfänger arbeitenden Schallwandler, derart angeordnet werden, dass wenigstens eine erste Messstrecke zwischen einer Schallemissionsfläche eines Senders und einer Schalldetektionsfläche eines Empfängers annähernd vertikal zur Erdoberfläche und wenigstens zwei Messstrecken zwischen einer Schallemissionsfläche eines Senders und einer Schalldetektionsfläche eines Empfängers geneigt hierzu angeordnet werden, wobei die drei Messtrecken nicht komplanar angeordnet und die zwei geneigten Messstrecken nicht horizontal ausgerichtet werden und dass die Auswerteeinheit unter Verwendung der Laufzeit, die die Schallwellen zum Zurücklegen der vertikal zur Erdoberfläche ausgerichteten Messstrecke benötigen eine Vertikalwindkomponente des Windvektors und unter Verwendung der Laufzeit, die die Schallwellen zum Zurücklegen der geneigten Messstrecke benötigen eine Horizontalwindkomponente des Windvektors ermittelt und dass die Sender derart angeordnet werden, dass senkrecht zur Oberfläche der Schallemissionsflächen ausgerichtete Strahlachsen nicht mit Achsen der wenigstens einen zur Erdoberfläche im Wesentlichen senkrechten Messstrecke übereinstimmen.

Auf bevorzugte Weise wird das Verfahren derart weitergebildet, dass aufgrund der speziellen Anordnung des wenigstens einen Senders und des zumindest einen Empfängers besonders genau eine vertikale Komponente des Windvektors bestimmt wird. Vorzugsweise wird hierbei ein Mittelwert der wenigstens einen Komponente des Windvektors bestimmt.

Gemäß einer speziellen Weiterbildung der Erfindung wird in Abhängigkeit einer Windrichtung wenigstens eine Messstrecke aus einer Gruppe von wenigsten zwei Messstrecken ausgewählt, um die wenigstens eine ausgewählte Messstrecke der Ermittlung der zumindest einen Komponente des Windgeschwindigkeitsvektors und/oder der Schallgeschwindigkeit zugrunde zu legen. Auf diese Weise werden sich negativ auf die Messergebnis auswirkende Windabschattungseffekte, insbesondere bedingt durch die Ultraschallwandler und/oder das Gestänge, an dem diese befestigt sind, zumindest minimiert.

Die Erfindung betrifft weiterhin eine besondere Verwendung eines erfindungsgemäß ausgeführten Ultraschallwindmessers. So eignet sich dieser auf besondere Weise zur Bestimmung von vertikalen Eddy Covariance-Flüssen von Luftbeimengungen und/oder Energie.

In dem beschriebenen Windmesser zur bevorzugten Messung der Vertikalwindkomponente werden die hohe Genauigkeit der bekannten Windmesser mit einer vertikalen und zwei horizontalen Messstrecken und die Robustheit gegenüber atmosphärischen Einflüssen der Windmesser mit geneigten Messstrecken vereint.

Hierbei zeichnet sich der erfindungsgemäße Windmesser dadurch aus, dass für die Bestimmung der horizontalen Windkomponenten keine horizontal gerichteten Messstrecken erforderlich sind, sondern der dreidimensionale Windvektor, einschließlich seiner horizontalen Komponenten, generell mit drei nicht-komplanar angeordneten Messstrecken bestimmbar ist. Daher sind bei dem erfindungsgemäß ausgeführten Windmesser die beiden übrigen Strecken auch nicht horizontal ausgerichtet sondern geneigt. Auf diese Weise wird die bei den bekannten Windmessgeräten mit einer vertikalen und zwei horizontalen Messstrecken bekannte Einschränkung durch Streckenabschattung vermieden.

Durch die breite Strahlcharakteristik der bevorzugt zum Einsatz kommenden Schallwandler ergibt sich die Möglichkeit einer besonders einfachen Realisierung der Messstrecken. Hierbei ist es denkbar, einen oder auch beide Schallwandler der vertikalen Strecke mit weiteren Schallwandlern zu paaren, so dass sie gleichzeitig zum Aufspannen der benötigten geneigten Messstrecken verwendet werden.

Im Folgenden wird die Erfindung ohne Beschränkung des allgemeinen Erfindungsgedankens anhand spezieller Ausführungsbeispiele unter Bezugnahme auf die Figuren näher erläutert. Dabei zeigen:
- Fig. 1:: Ultraschallwindmessgerät, bei dem der untere Schallwandler der vertikalen Messstrecke gleichzeitig zur Messung zweier geneigter Windkomponenten verwendet wird;
- Fig. 2:: Ultraschallwindmessgerät, bei dem sechs Schallwandler verwendet werden, die drei vertikale Messstrecken aufspannen;
- Fig. 3:: Ultraschallwindmessgerät mit einem aus drei Vertikalstreben gebildeten Halterahmen, bei dem sechs Schallwandler verwendet werden, zwischen denen die Messstrecken verlaufen sowie
- Fig. 4:: Ultraschallwindmessgerät mit Mittelstrebe, bei dem acht Schallwandler verwendet werden, zwischen denen die Messstrecken verlaufen.

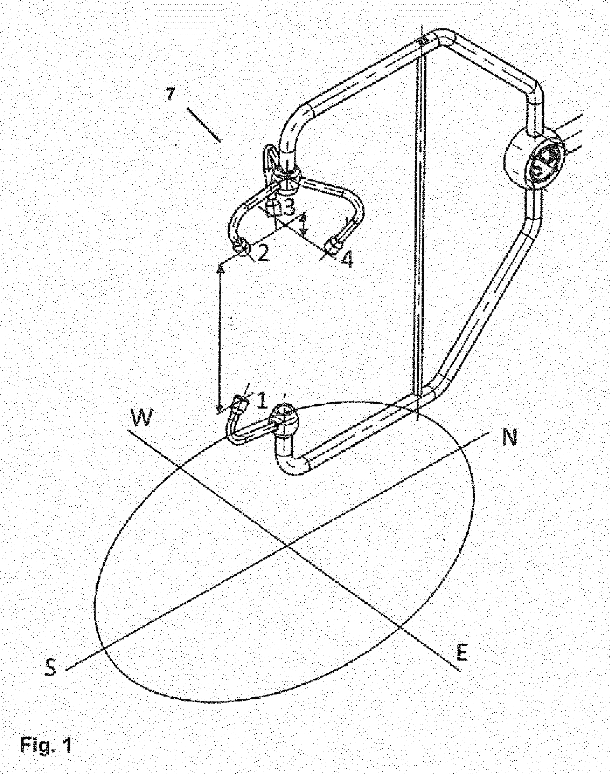

Figur 1 zeigt ein Ultraschallwindmessgerät 7, bei dem der untere Schallwandler 2 der vertikalen Messstrecke gleichzeitig zur Messung zweier geneigter Windkomponenten verwendet wird. Die Schallwandler 1 und 2 spannen die vertikale Messstrecke 1-2 auf und mit den Schallwandlern 1 und 3 bzw. 1 und 4 werden die geneigten Messstrecken 1-3 und 1-4 realisiert. Die tatsächlichen Streckenwinkel und Streckenlängen können von diesem Beispiel abweichen.

Gemäß einer beispielhaften Weiterbildung der Ausführungsform gemäß Figur, 1 die nicht Teil der beanspruchten Erfindung ist, ist es denkbar, den Schallwandler 2 zusätzlich nach oben und die Schallwandler 3 und 4 nach unten zu versetzen. Durch diesen Versatz wird eine evtl. Abschattung durch den Schallwandler 2 auf den Strecken 1-3 sowie 1-4 auch für schräge Anströmrichtungen vermieden oder zumindest reduziert.

Die auf den Messstrecken erfassten Laufzeiten der Schallwellen werden an eine Auswerteeinheit übertragen, in der auf der Grundlage der erfassten Laufzeiten drei Windkomponenten bestimmt werden, wobei aufgrund der speziellen Anordnung der Messstrecken insbesondere die vertikale Windkomponente mit besonderer Genauigkeit bestimmbar ist.

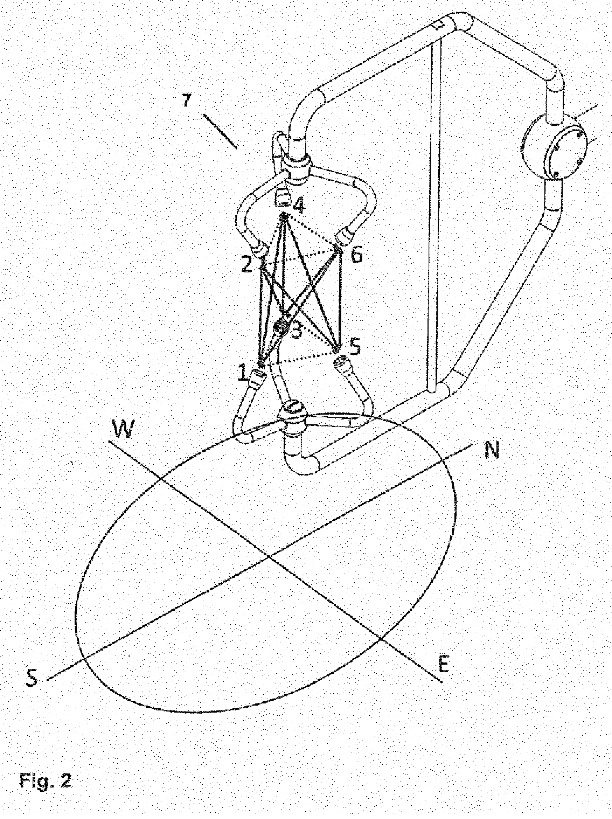

Darüber hinaus zeigt Figur 2 eine weitere beispielhafte Ausführungsform eines Ultraschallwindmessgeräts 7. In diesem Fall werden sechs Schallwandler 1, 2, 3, 4, 5, 6 verwendet, mit denen drei vertikale Messstrecken (1-2, 3-4, 5-6) aufgespannt werden. Mit denselben Wandlern werden gleichzeitig sechs geneigte Messstrecken realisiert (1-4, 1-6, 3-2, 3-6, 5-2, 5-4). Ohne höheren Aufwand im Vergleich zu einer herkömmlichen Schallwandler-Anordnung für den dreidimensionalen Windvektor können hier redundant Messstrecken realisiert werden. Abhängig von der jeweiligen Anströmrichtung kann somit eine Auswahl derjenigen Messstrecken getroffen werden, die aufgrund ihrer Position bei gegebener Anströmung die geringsten Abschattungseffekte erwarten lassen. Alternativ oder ergänzend können durch Mehrfachbestimmung Konsensus-Werte für die Windkomponenten ermittelt werden, die eine höhere Zuverlässigkeit und Genauigkeit als Einzelmessungen auf einzelnen Messstrecken ermöglichen. Vorteilhaft gegenüber der Ausführung der Variante in Figur 1 ist der symmetrische Aufbau der oberen und unteren Anordnung der Schallwandler.

Auch die gestrichelten Verbindungen in Figur 2 könnten grundsätzlich verwendet werden. Sie sind aber von nachrangiger Bedeutung, da sie die unerwünschte horizontale Ausrichtung besitzen und außerdem zu weit von den jeweiligen Strahlachsen abweichen, wodurch die Stärke des Nutzsignals und damit die Genauigkeit der Messungen reduziert werden.

Für die Auswertung der erfassten Laufzeiten ist wiederum eine geeignete Auswerteeinheit vorgesehen, die aus den erfassten Laufzeiten die Komponenten des Windvektors ermittelt. Die Ausgabe der Informationen über den ermittelten Windvektor kann über einen Monitor bzw. ein Display oder jede andere geeignete Anzeigeeinheit erfolgen.

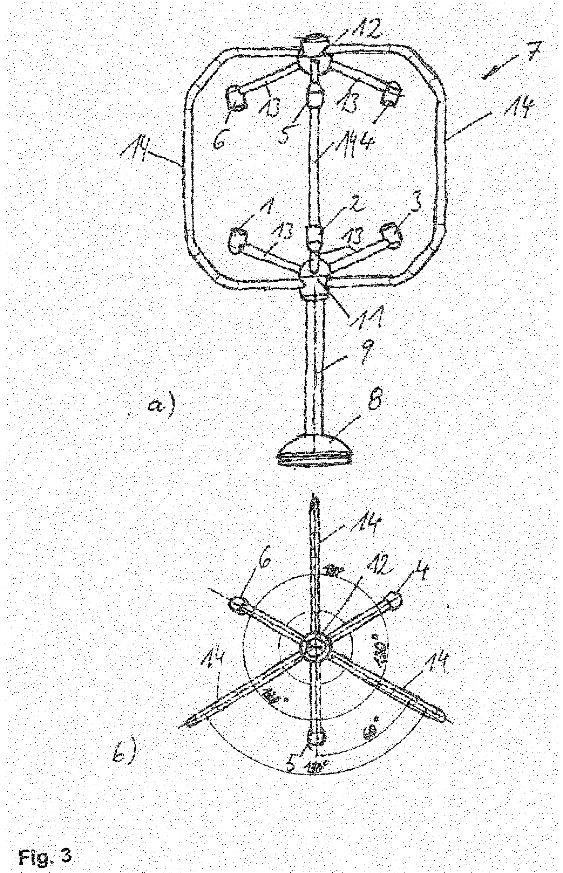

Figur 3 zeigt ein Ultraschallwindmessgerät 7 mit einem aus drei gebogenen Vertikalstreben 14 gebildeten Halterahmen, bei dem sechs Schallwandler 1-6 verwendet werden, die drei Messstrecken aufspannen. In diesem Zusammenhang zeigt Figur 3a) eine Seitenansicht und Figur 3b) eine Draufsicht auf ein Ultraschallwindmessgerät 7.

Wesentlich an dem dargestellten Ultraschallwindmessgerät 7 ist, dass im zentralen Bereich ein Haltefuß 8 zur Befestigung auf einem Dach oder an einer Mastspitze mit einer vertikal nach oben verlaufenden Zentralstrebe 9 vorgesehen ist. Am Ende dieser Zentralstrebe 9 sind wiederum drei an einem unteren Aufnehmer 11 befestigten Auslegerstangen 13 vorgesehen. Benachbarte Auslegerstangen 13, an deren Ende jeweils ein Ultraschallwandler 1-3 befestigt ist, schließen in einer horizontalen Ebene jeweils einen Winkel von 120° ein. Die Auslegerstangen 13 sind gegenüber der Horizontalen bevorzugt um einen Winkel zwischen 15° und 20° geneigt, sodass hierdurch auch die am Ende der Auslegerstangen 13 angeordneten und fest mit den Stangen 13 verbundenen Ultraschallwandler 1-6 um diesen Winkel gegenüber der Horizontalen geneigt sind.

Außer den Auslegerstangen 13 für die Ultraschallwandler 1-6 sind am oberen Ende der Zentralstrebe 9 am unteren Aufnehmer 11 drei U- bzw. C-förmig ausgebildete Vertikalstreben 14 befestigt, die von hier aus zu einem oberen Aufnehmer 12 des Ultraschallwindmessgerätes 7 verlaufen. Im Bereich des unteren Aufnehmers 11 sind die gebogenen Vertikalstreben 14 jeweils unterhalb der Auslegerstangen 13, an denen die Ultraschallwandler 1-3 angeordnet sind, befestigt.

Am oberen Aufnehmer 12 des Ultraschallwindmessgeräts 7 sind die gebogenen vertikalstreben 14 jeweils oberhalb der Auslegerstangen 13 für die Ultraschallwandler 4-6 und um einen Winkel von 60° in der Horizontalen gegenüber den Auslegerstangen 13 mit den Ultraschallwandlern 4-6 gedreht angeordnet.

Durch die in Figur 3 dargestellte beispielhafte Ausführungsform, bei der wiederum wenigstens eine vertikale Messstrecke zwischen zwei Ultraschallwandlern 1-6 mit gegenüber der Horizontalen geneigten Schallaustrittsflächen realisiert wird, wird ein Ultraschallwindmessgerät 7 bereitgestellt, das sich auf bevorzugte Weise an für eine Windmessung exponierten Stellen, wie etwa an Mastspitzen, montieren lässt. Gleichzeitig sind die gebogenen Vertikalstreben 14 derart ausgeführt, dass einerseits eine ausreichende Steifigkeit und Festigkeit des Windmessers sichergestellt ist und gleichzeitig eine nahezu störungsfreie Windanströmung der einzelnen Ultraschallwandler 1-6 erreicht wird.

In dem in Figur 3 gezeigten beispielhaften Ausführungsbeispiel sind jeweils zwei Ultraschallwandler 1-6 mit geneigter Schallaustritts- bzw. Schalleintrittsfläche übereinander angeordnet. Hierbei werden auf bevorzugte Weise Ultraschallwandler 1-6 verwendet, die in unterschiedliche Richtungen Schallwellen aussenden und aus unterschiedlichen Richtungen Schallwellen empfangen können, wobei die Schallwandler 1-6 ganz bevorzugt eine halbkugelförmige Abstrahlungscharakteristik bzw. Empfangscharakteristik aufweisen.

Zur Messung der Geschwindigkeit und der Richtung des anströmenden Windes können mit dem in Figur 3 dargestellten Windmessgerät 7 sowohl die Laufzeiten der Schallwellen zwischen zwei vertikal übereinander angeordneten Ultraschallwandlern 1-6 als auch jeweils zwischen einem der unteren Schallwandlern 1-3 und den oberen Schallwandlern 4-6 gemessen und ausgewertet werden. Von jedem Schallwandler 1-6 können hierbei drei Messstrecken aufgespannt werden, wobei wenigstens eine dieser Messstrecken in vertikaler Richtung verläuft. Für die Realisierung der Erfindung ist es hierbei grundsätzlich unerheblich, ob die einzelnen Schallwandler 1-6 nacheinander oder gleichzeitig senden und ob unter den Ultraschallwandlern 1-6 feste Sender und Empfänger vorgesehen sind oder aber die einzelnen Ultraschallwandler 1-6 jeweils abwechselnd als Sender und als Empfänger fungieren.

Für die Auswertung der erfassten Laufzeiten ist wiederum eine geeignete Auswerteeinheit vorgesehen, die aus den erfassten Laufzeiten die Komponenten des Windvektors ermittelt. Die Ausgabe der Informationen über den ermittelten Windvektor kann über einen Monitor bzw. ein Display oder jede andere geeignete Anzeigeeinheit erfolgen.

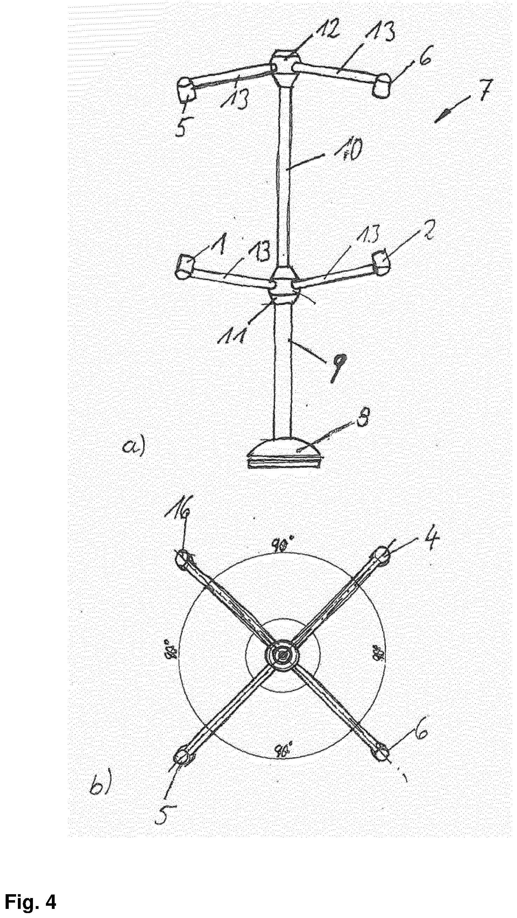

In Figur 4 ist eine weitere beispielhafte Ausführungsform eines Ultraschallwindmessgeräts 7 dargestellt. Hierbei zeigt Figur 4a) eine Seitenansicht und Figur 4b) eine Draufsicht auf ein Ultraschallwindmessgerät 7.

Die Ultraschallwandler 1-6, 15, 16 sind, wie im Zusammenhang mit Figur 3 bereits erläutert, an Auslegerstangen 13 befestigt, die gegenüber der Horizontalen geneigt angeordnet sind.

Gemäß der in Figur 4 gezeigten beispielhaften Ausführungsform sind allerdings acht Ultraschallwandler 1-6, 15, 16 vorgesehen, von denen jeweils vier in einer horizontalen Ebene angeordnet sind. Benachbarte Ultraschallwandler 1-6, 15, 16 schließen jeweils in einer horizontalen Ebene einen Winkel von 90° ein und sind über Auslegerstangen 13 an Aufnehmern 11, 12 des Ultraschallwindmessgeräts 7 befestigt. Jeweils vier Ultraschallwandler 1-3, 15 sind an einem unteren Aufnehmer 11 und vier an einem oberen Aufnehmer 12 befestigt.

Es ist wiederum ein Haltefuß 8 vorgesehen, an dem eine zentrale Haltestrebe 9 befestigt ist, die in vertikaler Richtung bis zu einem unteren Aufnehmer 11 zur Befestigung der Auslegerstangen 13 mit den Ultraschallwandlern 1-3, 15 verläuft. Gemäß dieser beispielhaften Ausführungsform sind der untere und der obere Aufnehmer 11, 12 zur Befestigung der Auslegerstangen 13 mit den Ultraschallwandlern 1-6, 15, 16 allerdings nicht über im Außenbereich verlaufende gebogene Vertikalstreben 14, sondern über eine mittig angeordnete Zentralstange 10 mit einander verbunden. Auch in diesem Fall sind die Ultraschallwandler 1-6, 15, 16 derart angeordnet, dass eine nahezu ungestörte Anströmung des Windes sichergestellt ist und das Ultraschallwindmessgerät 7 auf bevorzugte Weise auf Mastspitzen montiert werden kann.

Zur Messung der Geschwindigkeit und der Richtung des anströmenden Windes können mit dem in Figur 4 dargestellten Windmessgerät 7 wiederum sowohl die Laufzeiten der Schallwellen zwischen zwei vertikal übereinander angeordneten Ultraschallwandlern 1-6, 15, 16 als auch jeweils zwischen einem der unteren Schallwandlern 1-3, 15 und den oberen Schallwandlern 4-6, 16 gemessen und ausgewertet werden. Von jedem Schallwandler 1-6, 15, 16 können hierbei vier Messstrecken aufgespannt werden, wobei eine dieser Messstrecken in vertikaler Richtung verläuft. Für die Realisierung der Erfindung ist es hierbei grundsätzlich unerheblich, ob die einzelnen Schallwandler 1-6, 15, 16 nacheinander oder gleichzeitig senden und ob unter den Ultraschallwandlern 1-6, 15, 16 feste Sender und Empfänger vorgesehen sind oder aber die einzelnen Ultraschallwandler 1-6, 15, 16 jeweils abwechselnd als Sender und als Empfänger fungieren.

Für die Auswertung der erfassten Laufzeiten ist auch in diesem Ausführungsbeispiel eine geeignete Auswerteeinheit vorgesehen, die aus den erfassten Laufzeiten die Komponenten des Windvektors ermittelt. Die Ausgabe der Informationen über den ermittelten Windvektor kann über einen Monitor bzw. ein Display oder jede andere geeignete Anzeigeeinheit erfolgen.

### Bezugszeichenliste

- 1: Schallwandler
- 2: Schallwandler
- 3: Schallwandler
- 4: Schallwandler
- 5: Schallwandler
- 6: Schallwandler
- 7: Ultraschallwindmessgerät
- 8: Haltefuß
- 9: Zentralstrebe unten
- 10: Zentralstrebe mitte
- 11: Aufnehmer unten
- 12: Aufnehmer oben
- 13: Auslegerstange
- 14: gebogene Vertikalstreben
- 15: Schallwandler
- 16: Schallwandler

## Patentansprüche

1. Ultraschallwindmesser (7) zur Ermittlung eines dreidimensionalen Windvektors oder sowohl eines dreidimensionalen Windvektors als auch einer Schallgeschwindigkeit mit wenigstens einem zumindest zeitweise als Sender arbeitenden Schallwandler (1, 2, 3, 4, 5, 6, 15, 16) mit einer Schallemissionsfläche zum Emittieren von Schallwellen und zumindest einem zumindest zeitweise als Empfänger arbeitenden Schallwandler (1, 2, 3, 4, 5, 6, 15, 16) mit einer Schalldetektionsfläche zum wenigstens teilweisen Aufnehmen der emittierten Schallwellen und mit einer Auswerteeinheit, die unter Zugrundelegung einer erfassten Laufzeit, die die Schallwellen auf einer zwischen der Schallemissionsfläche des wenigstens einen Senders und der Schalldetektionsfläche des wenigstens einen Empfängers liegenden Messstrecke zum Zurücklegen dieser Messstrecke benötigen, den Windvektor oder den Windvektor und die Schallgeschwindigkeit ermittelt,
**dadurch gekennzeichnet, dass** die zumindest zeitweise als Sender und/oder als Empfänger arbeitenden Schallwandler (1, 2, 3, 4, 5, 6, 15, 16), derart angeordnet sind, dass wenigstens eine zur Erdoberfläche im Wesentlichen senkrechte Messstrecke und wenigstens zwei hierzu geneigte, nicht horizontal ausgerichtete Messstrecken, bereitgestellt werden, wobei die drei Messstrecken nicht komplanar angeordnet sind, und senkrecht zur Oberfläche der Schallemissionsflächen ausgerichtete Strahlachsen nicht mit Achsen der wenigstens einen zur Erdoberfläche im Wesentlichen senkrechten Messstrecke übereinstimmen und dass die Auswerteeinheit eingerichtet ist, um unter Verwendung einer Laufzeit, die die Schallwellen zum Zurücklegen der zur Erdoberfläche senkrechten Messstrecke benötigen, eine vertikale Windkomponente des Windvektors und unter Verwendung einer Laufzeit, die die Schallwellen zum Zurücklegen der wenigstens zwei geneigten Messstrecken benötigen, eine horizontale Windkomponente des Windvektors zu ermitteln.

2. Ultraschallwindmesser nach Anspruch 1,
**dadurch gekennzeichnet, dass** die Schallemissionsfläche und/oder die Schalldetektionsfläche eine Membran aufweist.

3. Ultraschallwindmesser nach Anspruch 1 oder 2,
**dadurch gekennzeichnet, dass** der Sender und/oder der Empfänger wenigstens zeitweise beheizbar sind.

4. Ultraschallwindmesser nach einem der Ansprüche 1 bis 3,
**dadurch gekennzeichnet, dass** die Auswerteeinheit derart ausgeführt ist, dass in Abhängigkeit einer Windrichtung eine Messtrecke aus einer Gruppe von wenigstens zwei Messstrecken für die Ermittlung Windvektors oder des Windvektors und der Schallgeschwindigkeit herangezogen wird.

5. Ultraschallwindmesser nach einem der Ansprüche 1 bis 4,
**dadurch gekennzeichnet, dass** die Auswerteeinheit derart ausgeführt ist, dass ein Mittelwert der wenigstens einen Komponente des Windgeschwindigkeitsvektors bestimmt wird.

6. Verfahren zur Ermittlung eines dreidimensionalen Windvektors oder sowohl eines dreidimensionalen Windvektors als auch einer Schallgeschwindigkeit, bei dem mit wenigstens einem zumindest zeitweise als Sender arbeitenden Schallwandler (1, 2, 3, 4, 5, 6, 15, 16) mit einer Schallemissionsfläche Schallwellen emittiert und mit zumindest einem zumindest zeitweise als Empfänger arbeitenden Schallwandler (1, 2, 3, 4, 5, 6, 15, 16) mit einer Schalldetektionsfläche die emittierten Schallwellen aufgenommen werden und bei dem mit einer Auswerteeinheit, unter Zugrundelegung einer erfassten Laufzeit, die die Schallwellen auf einer zwischen der Schallemissionsfläche des wenigstens einen Senders und der Schalldetektionsfläche des wenigstens einen Empfängers liegenden Messstrecke zum Zurücklegen dieser Messstrecke benötigen, der Windvektor oder der Windvektor und die Schallgeschwindigkeit ermittelt wird,
**dadurch gekennzeichnet, dass** die zumindest zeitweise als Sender und/oder als Empfänger arbeitenden Schallwandler (1, 2, 3, 4, 5, 6, 15, 16), derart angeordnet werden, dass wenigstens eine erste Messstrecke zwischen einer Schallemissionsfläche eines Senders und einer Schalldetektionsfläche eines Empfängers annähernd vertikal zur Erdoberfläche und wenigstens zwei Messstrecken zwischen einer Schallemissionsfläche eines Senders und einer Schalldetektionsfläche eines Empfängers geneigt hierzu angeordnet werden, wobei die drei Messtrecken nicht komplanar angeordnet und die zwei geneigten Messstrecken nicht horizontal ausgerichtet werden und dass die Auswerteeinheit unter Verwendung der Laufzeit, die die Schallwellen zum Zurücklegen der vertikal zur Erdoberfläche ausgerichteten Messstrecke benötigen eine Vertikalwindkomponente des Windvektors und unter Verwendung der Laufzeit, die die Schallwellen zum Zurücklegen der geneigten Messstrecke benötigen eine Horizontalwindkomponente des Windvektors ermittelt und dass die Sender derart angeordnet werden, dass senkrecht zur Oberfläche der Schallemissionsflächen ausgerichtete Strahlachsen nicht mit Achsen der wenigstens einen zur Erdoberfläche im Wesentlichen senkrechten Messstrecke übereinstimmen.

7. Verfahren nach Anspruch 6,
**dadurch gekennzeichnet, dass** eine vertikale Komponente des Windvektors bestimmt wird.

8. Verfahren nach Anspruch 6 oder 7,
**dadurch gekennzeichnet, dass** ein Mittelwert der wenigstens einen Komponente des Windvektors bestimmt wird.

9. Verfahren nach einem der Ansprüche 6 bis 8,
**dadurch gekennzeichnet, dass** in Abhängigkeit einer Windrichtung wenigstens eine Messstrecke aus einer Gruppe von wenigsten zwei Messstrecken ausgewählt wird, um die wenigstens eine ausgewählte Messstrecke der Ermittlung des Windvektors oder des Windvektors und der Schallgeschwindigkeit zugrunde zu legen.

10. Verwendung eines Ultraschallwindmessers nach einem der Ansprüche 1 bis 5 zur Bestimmung von vertikalen Eddy Covariance-Flüssen von Luftbeimengungen und/oder Energie.

## Claims

1. An ultrasonic anemometer (7) for determining a three-dimensional wind vector or a three-dimensional wind vector as well as a sound velocity, having at least one sound transducer (1, 2, 3, 4, 5, 6, 15, 16) at least temporarily working as a transmitter with a sound emission surface for emitting sound waves and at least one sound transducer (1, 2, 3, 4, 5, 6, 15, 16) at least temporarily working as a receiver with a sound detection surface for at least partially receiving the emitted sound waves, and having an evaluation unit, which determines the wind vector or the wind vector and the sound velocity on the basis of a recorded runtime, which the sound waves, on a measuring section lying between the sound emission surface of the at least one transmitter and the sound detection surface of the at least one receiver, need to cover this measuring section,
**characterized in that** the sound transducers (1, 2, 3, 4, 5, 6, 15, 16) at least temporarily working as a transmitter and/or as a receiver are arranged such that at least one measuring section essentially vertical to the earth's surface and at least two measuring sections not aligned horizontally inclined thereto are provided, wherein the three measuring sections are not arranged in a coplanar fashion, and beam axes vertically aligned to the surface of the sound emission surfaces do not match axes of the at least one measuring section essentially vertical to the earth's surface, and that the evaluation unit is arranged to determine a vertical wind component of the wind vector using a runtime the sound waves need to cover the measuring section vertical to the earth's surface and a horizontal wind component of the wind vector using a runtime the sound waves need to cover the at least two inclined measuring sections.

2. The ultrasonic anemometer according to claim 1,
**characterized in that** the sound emission surface and/or the sound detection surface comprises a membrane.

3. The ultrasonic anemometer according to claim 1 or 2,
**characterized in that** the transmitter and/or the receiver are at least temporarily heatable.

4. The ultrasonic anemometer according to any one of claims 1 to 3,
**characterized in that** the evaluation unit is designed such that, depending on a wind direction, a measuring section from a group of at least two measuring sections is used for the determination of the wind vector or the wind vector and the sound velocity.

5. The ultrasonic anemometer according to any one of claims 1 to 4,
**characterized in that** the evaluation unit is designed such that a mean value of the at least one component of the wind velocity vector is determined.

6. A method for determining a three-dimensional wind vector or a three-dimensional wind vector as well as a sound velocity, in which, with at least one sound transducer (1, 2, 3, 4, 5, 6, 15, 16) at least temporarily working as a transmitter with a sound emission surface, sound waves are emitted and, with at least one sound transducer (1, 2, 3, 4, 5, 6, 15, 16) at least temporarily working as a receiver with a sound detection surface, the emitted sound waves are received, and in which the wind vector or the wind vector and the sound velocity are determined with an evaluation unit on the basis of a recorded runtime, which the sound waves, on a measuring section lying between the sound emission surface of the at least one transmitter and the sound detection surface of the at least one receiver, need to cover this measuring section, **characterized in that** the sound transducers (1, 2, 3, 4, 5, 6, 15, 16) at least temporarily working as a transmitter and/or as a receiver are arranged such that at least one first measuring section between a sound emission surface of a transmitter and a sound detection surface of a receiver is arranged approximately vertical to the earth's surface and at least two measuring sections between a sound emission surface of a transmitter and a sound detection surface of a receiver are arranged inclined thereto, wherein the three measuring sections are not arranged in a coplanar fashion, and the two inclined measuring sections are not aligned horizontally, and that the evaluation unit determines a vertical wind component of the wind vector using the runtime the sound waves need to cover the measuring section aligned vertical to the earth's surface and a horizontal wind component of the wind vector using the runtime the sound waves need to cover the inclined measuring section, and that the transmitters are arranged such that beam axes aligned vertically to the surface of the sound emission surfaces do not match axes of the at least one measuring section essentially vertical to the earth's surface.

7. The method according to claim 6,
**characterized in that** a vertical component of the wind vector is determined.

8. The method according to claim 6 or 7,
**characterized in that** a mean value of the at least one component of the wind vector is determined.

9. The method according to any one of claims 6 to 8,
**characterized in that**, depending on a wind direction, at least one measuring section from a group of at least two measuring sections is selected, in order to take the at least one selected measuring section as the basis for the determination of the wind vector or the wind vector and the sound velocity.

10. Use of an ultrasonic anemometer according to any one of claims 1 to 5 for determining vertical eddy covariance fluxes of air admixtures and/or energy.

## Revendications

1. Anémomètre à ultrasons (7) pour déterminer un vecteur vent tridimensionnel ou à la fois un vecteur vent tridimensionnel et une vitesse du son, comportant au moins un transducteur acoustique (1, 2, 3, 4, 5, 6, 15, 16), fonctionnant du moins temporairement comme émetteur et présentant une surface d'émission sonore pour émettre des ondes sonores, au moins un transducteur acoustique (1, 2, 3, 4, 5, 6, 15, 16), fonctionnant du moins temporairement comme récepteur et présentant une surface de détection sonore pour capter au moins partiellement les ondes sonores émises, et une unité d'évaluation qui détermine le vecteur vent ou la vitesse du son sur la base d'un temps de transit détecté dont les ondes sonores ont besoin sur un trajet de mesure situé entre ladite surface d'émission sonore dudit au moins un émetteur et ladite surface de détection sonore dudit au moins un récepteur afin de couvrir ce trajet de mesure,
**caractérisé en ce que** lesdits transducteurs acoustiques (1, 2, 3, 4, 5, 6, 15, 16) fonctionnant au moins temporairement comme émetteurs et/ou comme récepteurs sont disposés de telle sorte qu'au moins un trajet de mesure essentiellement perpendiculaire à la surface terrestre et au moins deux trajets de mesure inclinés par rapport à celle-ci et non alignés horizontalement soient prévus, lesdits trois trajets de mesure étant disposés de manière non coplanaire, et que les axes de faisceaux perpendiculaires à la surface desdites surfaces d'émission sonore ne coïncident pas avec les axes dudit au moins un trajet de mesure essentiellement perpendiculaire à la surface terrestre, et que ladite unité d'évaluation soit conçue pour déterminer une composante verticale du vent du vecteur vent en utilisant un temps de transit nécessaire aux ondes sonores pour couvrir le trajet de mesure perpendiculaire à la surface terrestre et pour déterminer une composante horizontale du vent du vecteur vent en utilisant un temps de transit nécessaire aux ondes sonores pour couvrir les au moins deux trajets de mesure inclinés.

2. L'anémomètre à ultrasons selon la revendication 1,
**caractérisé en ce que** ladite surface d'émission sonore et/ou la surface de détection sonore comprend une membrane.

3. Anémomètre à ultrasons selon la revendication 1 ou 2,
**caractérisé en ce que** l'émetteur et/ou le récepteur peuvent être chauffés au moins temporairement.

4. Anémomètre à ultrasons selon l'une des revendications 1 à 3,
**caractérisé en ce que** ladite unité d'évaluation est conçue de telle sorte qu'en fonction d'une direction du vent, un trajet de mesure d'un groupe d'au moins deux trajets de mesure soit utilisé pour déterminer le vecteur vent ou du vecteur vent et de la vitesse du son.

5. Anémomètre à ultrasons selon l'une des revendications 1 à 4,
**caractérisé en ce que** ladite unité d'évaluation est conçue de telle sorte qu'une valeur moyenne de ladite au moins une composante du vecteur de vitesse du vent soit déterminée.

6. Procédé pour déterminer un vecteur vent tridimensionnel ou à la fois un vecteur vent tridimensionnel et une vitesse du son, dans lequel des ondes sonores sont émises avec au moins un transducteur acoustique (1, 2, 3, 4, 5, 6, 15, 16), fonctionnant du moins temporairement comme émetteur et présentant une surface d'émission sonore, et des ondes sonores sont captées avec au moins un transducteur acoustique (1, 2, 3, 4, 5, 6, 15, 16), fonctionnant au moins temporairement comme récepteur et présentant une surface de détection sonore, et dans lequel le vecteur vent ou le vecteur vent et la vitesse du son sont déterminés au moyen d'une unité d'évaluation sur la base d'un temps de transit enregistré dont les ondes sonores ont besoin sur un trajet de mesure situé entre ladite surface d'émission sonore dudit au moins un émetteur et ladite surface de détection sonore dudit au moins un récepteur afin de couvrir ce trajet de mesure,
**caractérisé en ce que** lesdits transducteurs acoustiques (1, 2, 3, 4, 5, 6, 15, 16) fonctionnant au moins temporairement comme émetteurs et/ou comme récepteurs sont disposés de telle sorte qu'au moins un premier trajet de mesure entre une surface d'émission sonore d'un émetteur et une surface de détection sonore d'un récepteurs soit disposée approximativement perpendiculairement à la surface terrestre et au moins deux trajets de mesure entre une surface d'émission sonore d'un émetteur et une surface de détection sonore d'un récepteur soient disposées de manière inclinée par rapport à celle-ci, lesdits trois trajets de mesure étant disposés de manière non coplanaire et lesdits deux trajets de mesure inclinés n'étant pas alignés horizontalement, **en ce que** ladite unité d'évaluation détermine une composante verticale du vent du vecteur vent sur la base du temps de transit nécessaire aux ondes sonores pour couvrir le trajet de mesure perpendiculaire à la surface terrestre, et une composante horizontale du vent du vecteur vent sur la base du temps de transit nécessaire aux ondes sonores pour couvrir le trajet de mesure incliné, et **en ce que** les émetteurs sont disposés de telle sorte que les axes de faisceaux perpendiculaires à la surface desdites surfaces d'émission sonore ne coïncident pas avec les axes dudit au moins un trajet de mesure qui est essentiellement perpendiculaire à la surface terrestre.

7. Procédé selon la revendication 6,
**caractérisé en ce qu'**une composante verticale du vecteur vent est déterminée.

8. Procédé selon la revendication 6 ou 7,
**caractérisé en ce qu'**une valeur moyenne de ladite au moins une composante du vecteur vent est déterminée.

9. Procédé selon l'une des revendications 6 à 8,
**caractérisé en ce qu'**au moins un trajet de mesure est choisi dans un groupe d'au moins deux trajets de mesure en fonction d'une direction du vent afin de baser la détermination du vecteur vent ou du vecteur vent et de la vitesse du son sur ledit au moins un trajet de mesure choisi.

10. Utilisation d'un anémomètre à ultrasons selon l'une des revendications 1 à 5 pour la détermination des flux turbulents verticaux des polluants de l'air et/ou de l'énergie.
